(19) Europäisches Patentamt
European Patent Office
Office européen des brevets

(11) **EP 4 138 197 B1**

(12) **EUROPEAN PATENT SPECIFICATION**

(45) Date of publication and mention of the grant of the patent:
**03.06.2026 Bulletin 2026/23**

(21) Application number: **21824975.3**

(22) Date of filing: **18.06.2021**

(51) International Patent Classification (IPC):
***H01M 50/403*** (2021.01) ***H01M 50/446*** (2021.01)
***H01M 50/449*** (2021.01) ***H01M 10/052*** (2010.01)
***H01M 10/0525*** (2010.01) ***H01M 50/414*** (2021.01)
***H01M 50/417*** (2021.01) ***H01M 50/42*** (2021.01)
***H01M 50/443*** (2021.01) ***H01M 50/457*** (2021.01)
***H01M 50/46*** (2021.01) ***H01M 50/489*** (2021.01)

(52) Cooperative Patent Classification (CPC):
**H01M 50/449; H01M 10/052; H01M 10/0525; H01M 50/403; H01M 50/414; H01M 50/417; H01M 50/42; H01M 50/443; H01M 50/446; H01M 50/457; H01M 50/461; H01M 50/489;**
Y02E 60/10

(86) International application number:
**PCT/KR2021/007703**

(87) International publication number:
**WO 2021/256905 (23.12.2021 Gazette 2021/51)**

(54) **METHOD FOR MANUFACTURING SEPARATOR, AND SEPARATOR MANUFACTURED THEREBY**

VERFAHREN ZUR HERSTELLUNG EINES SEPARATORS UND IN DIESEM VERFAHREN HERGESTELLTER SEPARATOR

PROCÉDÉ DE FABRICATION DE SÉPARATEUR ET SÉPARATEUR AINSI FABRIQUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2020 KR 20200074358**

(43) Date of publication of application:
**22.02.2023 Bulletin 2023/08**

(73) Proprietor: **LG Energy Solution, Ltd.**
**Seoul 07335 (KR)**

(72) Inventors:
- **JEONG, So-Mi**
  **Daejeon 34122 (KR)**
- **KIM, Min-Ji**
  **Daejeon 34122 (KR)**
- **HAN, Da-Kyung**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**WO-A1-03/012896** **KR-A- 20090 051 085**
**KR-A- 20150 089 000** **KR-A- 20170 083 283**
**KR-B1- 101 470 696** **US-A1- 2015 111 086**

- **WANG YI-FAN ET AL: "Thermoplastic polyurethane/poly(methyl methacrylate)/titania gel electrolyte film with high voltage and coulombic efficiency for lithium-ion battery", IONICS, KIEL, DE, vol. 25, no. 8, 26 March 2019 (2019-03-26), pages 3695 - 3704, XP036841357, ISSN: 0947-7047, [retrieved on 20190326], DOI: 10.1007/S11581-019-02947-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to a method for manufacturing a separator applicable to an electrochemical device, such as a lithium secondary battery, and a separator obtained thereby.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Although electrochemical devices, such as lithium secondary batteries, have been produced from many production companies, safety characteristics thereof show different signs. Evaluation and securement of safety of such electrochemical devices are very important. For example, a separator prevents a short-circuit between a positive electrode and a negative electrode and provides a channel for transporting lithium ions. Therefore, a separator is an important factor affecting the safety and output characteristics of a battery.

Meanwhile, such a separator is interposed between electrodes and subjected to lamination under the application of pressure in order to obtain an electrode assembly including a positive electrode and a negative electrode. Herein, the pore structure in the separator may be deformed by the pressure applied to the separator. In addition, when using a silicon-based negative electrode to accomplish high energy density, the negative electrode active material may undergo volume swelling to cause deformation of the pore structure in the separator.

Therefore, there is a need for providing a separator having improved compression resistance and showing improved adhesion to an electrode.

### DISCLOSURE

#### Technical Problem

The present disclosure is designed to solve the problems of the related art, and therefore the present disclosure is directed to providing a method for manufacturing a separator showing improved adhesion to an electrode and having improved compression resistance and a separator obtained thereby.

The present disclosure is also directed to providing an electrochemical device provided with the separator.

#### Technical Solution

In one aspect of the present disclosure, there is provided a method for manufacturing a separator according to any one of the following embodiments.

According to the first embodiment, there is provided a method for manufacturing a separator for a lithium secondary battery, including the steps of:

preparing slurry for forming a porous coating layer which includes inorganic particles dispersed in an asymmetric linear ketone solvent and a binder polymer, including a first binder polymer and a second binder polymer, dissolved therein; and

applying the slurry for forming a porous coating layer onto a porous polymer substrate having a plurality of pores, followed by drying,

wherein the first binder polymer is thermoplastic polyurethane including a soft segment having a polyol-derived repeating unit and a hard segment having an urethane binding structure,

the second binder polymer is an acrylate-based polymer having a glass transition temperature (Tg) of 25-125°C, and the first binder polymer is introduced in an amount larger than 10 parts by weight based on 100 parts by weight of the total content of the binder polymer,

and wherein the second binder polymer comprises a repeating unit derived from at least one monomer selected from a

methyl acrylate monomer, an ethyl acrylate monomer, a butyl acrylate monomer, a 2-ethylhexyl acrylate monomer, an acrylic acid monomer and a methyl methacrylate monomer.

According to the second embodiment, there is provided the method for manufacturing a separator for a lithium secondary battery as defined in the first embodiment, wherein the first binder polymer has a melting point of 30-150°C.
According to the third embodiment, there is provided the method for manufacturing a separator for a lithium secondary battery as defined in the first or the second embodiment, wherein the first binder polymer includes the hard segment and the soft segment at a molar ratio of 10:90-90:10.
According to the fourth embodiment, there is provided the method for manufacturing a separator for a lithium secondary battery as defined in any one of the first to the third embodiments, wherein the first binder polymer has a weight average molecular weight of 10,000-1,000,000.
According to the fifth embodiment, there is provided the method for manufacturing a separator for a lithium secondary battery as defined in any one of the first to the fourth embodiments, wherein the second binder polymer has a weight average molecular weight of 10,000-1,000,000.
According to the sixth embodiment, there is provided the method for manufacturing a separator for a lithium secondary battery as defined in any one of the first to the fifth embodiments, wherein the second binder polymer includes a repeating unit derived from at least one monomer selected from a methyl acrylate monomer, a ethyl acrylate monomer, a butyl acrylate monomer, a 2-ethylhexyl acrylate monomer, an acrylic acid monomer and a methyl methacrylate monomer.
According to the seventh embodiment, there is provided the method for manufacturing a separator for a lithium secondary battery as defined in any one of the first to the sixth embodiments, wherein the asymmetric linear ketone solvent is an asymmetric linear ketone having a carbon atom number of 4-10.
According to the eighth embodiment, there is provided the method for manufacturing a separator for a lithium secondary battery as defined in any one of the first to the seventh embodiments, wherein the asymmetric linear ketone solvent includes methyl ethyl ketone, methyl propyl ketone, methyl isobutyl ketone, ethyl propyl ketone, ethyl isobutyl ketone, or two or more of them.
According to the ninth embodiment, there is provided the method for manufacturing a separator for a lithium secondary battery as defined in any one of the first to the eighth embodiments, wherein the drying step is carried out under a relative humidity of 30-80%.
According to the tenth embodiment, there is provided the method for manufacturing a separator for a lithium secondary battery as defined in any one of the first to the ninth embodiments, wherein the weight ratio of the inorganic particles to the total binder polymer is 95:5-5:95.
According to the eleventh embodiment, there is provided the method for manufacturing a separator for a lithium secondary battery as defined in any one of the first to the tenth embodiments, wherein the asymmetric linear ketone solvent is methyl ethyl ketone, the first binder polymer is thermoplastic polyurethane having a molar ratio of the hard segment to the soft segment of 10:90-90:10, and the second binder polymer is polymethyl methacrylate.
According to the twelfth embodiment, there is provided the method for manufacturing a separator for a lithium secondary battery as defined in any one of the first to the eleventh embodiments, wherein the separator has an adhesion (Lami strength) to an electrode of 60-300 gf/25 mm, and shows a compression ratio of the porous polymer substrate of 0-7% after lamination. 1 gf/25mm is 0.392 N/m.
In another aspect of the present disclosure, there is provided a separator according to the following embodiment.
According to the thirteenth embodiment, there is provided a separator for a lithium secondary battery obtained by the method as defined in any one of the first to the twelfth embodiments, including:

a porous polymer substrate; and
a porous coating layer formed on at least one surface of the porous polymer substrate, and including inorganic particles, a first binder polymer and a second binder polymer.

According to the fourteenth embodiment, there is provided a lithium secondary battery including a positive electrode, a negative electrode and a separator interposed between the positive electrode and the negative electrode, wherein the separator is the same as defined in the thirteenth embodiment.

Advantageous Effects

According to an embodiment of the present disclosure, slurry for forming a porous coating layer is prepared by dissolving a first binder polymer and a second binder polymer having predetermined properties in an asymmetric ketone solvent, and a separator may be obtained by using the slurry for forming a porous coating layer. In this manner, it is possible to improve the adhesion (Lami strength) to an electrode and to increase the compression resistance of the separator.

DESCRIPTION OF DRAWINGS

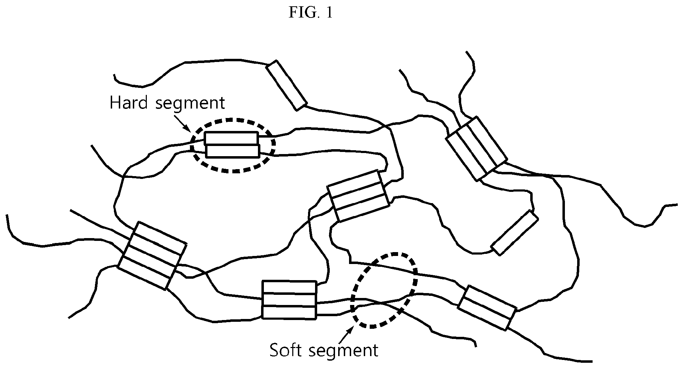

FIG. 1 is a schematic view illustrating the structure of thermoplastic polyurethane.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In an electrochemical device, such as a lithium secondary battery, a separator generally uses a porous polymer substrate, and thus has a problem in that it shows a thermal shrinking behavior. Therefore, a porous coating layer has been introduced in order to reduce the heat shrinkage of the separator.

Meanwhile, the separator is interposed between electrodes and subjected to lamination under the application of pressure in order to obtain an electrode assembly including a positive electrode and a negative electrode. Herein, the pore structure in the separator may be deformed by the pressure applied to the separator. In addition, when using a silicon-based negative electrode to accomplish high energy density, the negative electrode active material may undergo volume swelling to cause deformation of the pore structure in the separator.

Therefore, there is a need for providing a separator having improved compression resistance and showing improved adhesion to an electrode.

To solve the above-mentioned problems, the inventors of the present disclosure have conducted intensive studies to provide a method for manufacturing a separator having improved compression resistance and improved adhesion to an electrode, and a separator obtained thereby.

In one aspect of the present disclosure, there is provided a method for manufacturing a separator for a lithium secondary battery, including the steps of:

preparing slurry for forming a porous coating layer which includes inorganic particles dispersed in an asymmetric linear ketone solvent and a binder polymer, including a first binder polymer and a second binder polymer, dissolved therein; and
applying the slurry for forming a porous coating layer onto a porous polymer substrate having a plurality of pores, followed by drying,
wherein the first binder polymer is thermoplastic polyurethane including a soft segment having a polyol-derived repeating unit and a hard segment having an urethane binding structure,
the second binder polymer is an acrylate-based polymer having a glass transition temperature (Tg) of 25-125°C, and the first binder polymer is introduced in an amount larger than 10 parts by weight based on 100 parts by weight of the total content of the binder polymer.

First, prepared is slurry for forming a porous coating layer which includes inorganic particles dispersed in an asymmetric linear ketone solvent and a binder polymer, including a first binder polymer and a second binder polymer, dissolved therein.

Herein, the first binder polymer is a polymer including a soft segment having a polyol-derived repeating unit and a hard segment having an urethane binding structure. Since the first binder polymer has a property of being melted by heat and solidified again, it can increase the adhesion between the separator and an electrode (Lami strength) as well as the adhesion between the porous polymer substrate and the porous coating layer (Peel strength).

The first binder polymer is a block copolymer, wherein the molar ratio of the hard segment to the soft segment may be 10:90 or more, 20:80 or more, or 25:75 or more, and 90:10 or less, 85:15 or less, or 80:20 or less. Within the above-defined range, the first binder polymer may function as a physical crosslinking point, when the linear hard segment and the curved soft segment form an association region through phase separation. Particularly, when the ratio of the mole number of the hard segment based on the total mole number of the hard segment and the soft segment is 0.25 or more (i.e. when the molar ratio of the hard segment to the soft segment is 25:75 or more), the first binder polymer may have enhanced properties as a thermoplastic elastomer. Meanwhile, such an association region is dissociated at a temperature higher than a predetermined temperature, and thus the first binder polymer may function as an elastomer.

The first binder polymer may be thermoplastic polyurethane having a weight average molecular weight of 10,000 or more, 20,000 or more, or 50,000 or more, and 1,000,000 or less, 300,000 or less, or 200,000 or less. When the first binder polymer has the above-defined range of weight average molecular weight, it can be mixed with the second binder polymer to form a surface adhesive layer. Particularly, when the first binder polymer has a weight average molecular weight of 100,000-200,000, it is possible to accomplish a desired object of the present disclosure effectively.

For example, the first binder polymer may be thermoplastic polyurethane having a melting point of 30°C or more, 40°C or more, 50°C or more, or 60°C or more, and 150°C or less, 145°C or less, 140°C or less, or 135°C or less.

For example, the thermoplastic polyurethane may have a structure represented by the following Chemical Formula 1. Since the thermoplastic polyurethane has a hard segment and a soft segment as represented by Chemical Formula **1,** it provides a different phase separation effect.

[Chemical Formula 1]

$$OH-\cdot-O\overbrace{[CONH-R-NHOCO-R'-OCONH-R-NCO]}^{\text{Hard segment}}{}_x-[O\overbrace{-\cdot-}^{\text{Soft segment}}O]_y-\cdot-OH$$

More particularly, the hard segment and the soft segment of the linear polyurethane form an association region as shown in FIG. 1 so that the polyurethane may function as a physical crosslinking point. Such a crosslinking point is dissociated at a temperature higher than a predetermined temperature so that the thermoplastic polyurethane may function as an elastomer.

When using thermosetting polyurethane instead of thermoplastic polyurethane, as the first binder polymer, the crosslinking point cannot be dissociated so that the polyurethane may not realize adhesion to an electrode and may not function as an elastomer. First of all, already thermally cured polyurethane cannot be dissolved in the above-mentioned solvent, thereby making it difficult to realize a coating layer. In addition, since solution-type polyurethane cannot retain its shape at room temperature, it is not suitable as a binder capable of forming a separator surface adhesive layer.

Herein, the first binder polymer is introduced in an amount of larger than 10 parts by weight based on 100 parts by weight of the total content of the binder polymer. If the first binder polymer is used in an amount of 10 parts by weight or less, the effects of improving compression resistance and improving adhesion to an electrode are degraded. This is because the amount of the first binder is insufficient for improving the elasticity of the coating layer and reinforcing the binding of the coating layer.

According to an embodiment of the present disclosure, the first binder polymer may be used in an amount of 15-95 parts by weight, 20-90 parts by weight, or 30-90 parts by weight, based on 100 parts by weight of the total content of the binder polymer.

Meanwhile, when using the first binder polymer alone, it is not possible to form pores and an adhesive layer in the porous coating layer through a humidified phase separation process. In addition, when using the first binder polymer in combination with a conventional fluorine-based binder polymer at the same time, the first binder polymer is not miscible with the fluorine-based binder polymer so that phase separation may not occur and surface adhesion is hardly realized. Moreover, since interlayer separation occurs in the presence of an asymmetric linear ketone solvent, it is not possible to form a porous coating layer itself.

In other words, according to the present disclosure, the second binder polymer having desired properties as described hereinafter is used as an essential constitutional element.

The second binder polymer is an acrylate-based polymer having a glass transition temperature (Tg) of 25-125°C. Particularly, when using an acrylate-based polymer as the second binder polymer, the acrylate-based polymer can be mixed with the first binder polymer to form a surface adhesive layer, thereby providing improved adhesion to an electrode and a reduced compression ratio. Particularly, the acrylate-based polymer may have a glass transition temperature of 25°C or more, 30°C or more, 35°C or more, 40°C or more, 45°C or more, or 50°C or more, and 125°C or less, 120°C or less, 115°C or less, 110°C or less, 105 or less, or 100°C or less.

The second binder polymer may be an acrylate-based polymer having a weight average molecular weight of 10,000 or more, 50,000 or more, or 100,000 or more, and 1,000,000 or less, 600,000 or less, or 300,000 or less. When the second binder polymer has such a predetermined range of weight average molecular weight, it can realize adhesion to an electrode and can be mixed with the first binder polymer to form a porous coating layer.

The second binder polymer includes a repeating unit derived from at least one monomer selected from a methyl acrylate monomer, a ethyl acrylate monomer, a butyl acrylate monomer, a 2-ethylhexyl acrylate monomer, an acrylic acid monomer and a methyl methacrylate monomer.

In the case of a separator including a conventional fluorine-based copolymer alone as a binder polymer, an adhesive layer has been formed on the surface of a porous coating layer through so-called humidified phase separation, or a separate binder layer has been coated to impart adhesion between the separator and an electrode. In this case, when using a silicon-based negative electrode as a negative electrode, there are problems in that the negative electrode active material undergoes volume swelling to cause deformation of the pore structure in the separator, or the pore structure in the separator is deformed due to the pressure applied to the separator during the lamination of the separator between both

electrodes, as described above.

On the contrary, when the first binder polymer and the second binder polymer are used at the same time according to an embodiment of the present disclosure, it is possible to provide a separator having improved adhesion to an electrode and showing a low compression ratio of the porous polymer substrate. It is thought that this is because the first binder polymer imparts elastomeric properties to the porous coating layer, and the first binder polymer and the second binder polymer are mixed with each other to form a surface adhesive layer.

Meanwhile, the solvent used according to the present disclosure is an asymmetric linear ketone. Particularly, the solvent is an asymmetric linear ketone having a carbon atom number of 4-10. For example, the solvent may include methyl ethyl ketone, methyl propyl ketone, methyl isobutyl ketone, ethyl propyl ketone, ethyl isobutyl ketone, or two or more of them. The solvent can dissolve both the first binder polymer and the second binder polymer. For this, the slurry for forming a porous coating layer is stabilized so that a porous coating layer may be formed uniformly. However, acetone may be further added to the asymmetric linear ketone solvent in order to dissolve either the first binder polymer or the second binder polymer better.

According to the present disclosure, the inorganic particles are not particularly limited, as long as they are electrochemically stable. In other words, the inorganic particles are not particularly limited, as long as they cause no oxidation and/or reduction in the operating voltage range (e.g. 0-5 V based on $Li/Li^+$) of an applicable electrochemical device. Particularly, when using inorganic particles having a high dielectric constant, they contribute to an increase in dissociation degree of the electrolyte salt, particularly lithium salt, in a liquid electrolyte, and thus can improve ion conductivity of the electrolyte.

For these reasons, the inorganic particles may include inorganic particles having a dielectric constant of 5 or more, inorganic particles capable of transporting lithium ions and a mixture thereof.

The inorganic particles having a dielectric constant of 5 or more may be at least one selected from the group consisting of $Al_2O_3$, $SiO_2$, $ZrO_2$, AlO(OH), $TiO_2$, $BaTiO_3$, $Pb(Zr_xTi_{1-x})O_3$ (PZT, wherein $0 < x < 1$), $Pb_{1-x}La_xZr_{1-y}Ti_yO_3$ (PLZT, wherein $0 < x < 1$, $0 < y < 1$), $(1-x)Pb(Mg_{1/3}Nb_{2/3})O_3$-$xPbTiO_3$ (PMN-PT, wherein $0 < x < 1$), hafnia ($HfO_2$), $SrTiO_3$, $SnO_2$, $CeO_2$, MgO, NiO, CaO, ZnO, $ZO_3$ and SiC, or a mixture of two or more of them.

The inorganic particles capable of transporting lithium ions may be at least one selected from the group consisting of lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$-based glass ($Li_xSi_yS_z$, $0 < x < 3$, $0 < y < 2$, $0 < z < 4$) and $P_2S_5$-based glass ($Li_xP_yS_z$, $0 < x < 3$, $0 < y < 3$, $0 < z < 7$), or a mixture of two or more of them.

Although the average particle diameter of the inorganic particles is not particularly limited, the inorganic particles may preferably have an average particle diameter of 0.001-10 μm, more preferably 100 nm to 2 μm, and most preferably 150 nm to1 μm, in order to form a porous coating layer having a uniform thickness and to provide suitable porosity.

According to an embodiment of the present disclosure, the weight ratio of the inorganic particles to the total binder polymer may be 95:5-5:95. When the weight ratio of the inorganic particles to the total content of the binder polymer satisfies the above-defined range, it is possible to prevent the problem of a decrease in pore size and porosity of the resultant coating layer, caused by an increase in content of the binder polymer. It is also possible to solve the problem of degradation of peeling resistance of the resultant coating layer, caused by a decrease in content of the binder polymer.

The separator according to an embodiment of the present disclosure may further include a dispersing agent and other additives as ingredients of the porous coating layer, besides the above-described inorganic particles and binder polymer.

Herein, the slurry for forming a porous coating layer may be mixed by using a method generally known in the art. According to an embodiment of the present disclosure, the slurry for forming a porous coating layer may be prepared by dispersing inorganic particles in a polymer dispersion containing the first binder polymer and the second binder polymer dispersed in a solvent.

Then, the prepared slurry for forming a porous coating layer may be applied to a porous polymer substrate, followed by drying, to obtain a separator provided with a porous coating layer.

Particularly, in the separator according to an embodiment of the present disclosure, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters,

other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

There is no particular limitation in the thickness of the porous polymer substrate, the porous polymer substrate has a thickness of 1-100 μm, particularly 5-50 μm. Although there is no particular limitation in the size of the pores present in the porous polymer substrate and porosity, the pore size and porosity may be 0.01-50 μm and 20-75%, respectively.

The thickness of the porous coating layer is not particularly limited. Particularly, the porous coating layer may have a thickness of 1-15 μm, more particularly 1.5-10 μm, based on single-side coating. In addition, the porosity of the porous coating layer is not particularly limited, but the porous coating layer may have a porosity of 35-85%, preferably.

Although there is no particular limitation in the process for coating the slurry for forming a porous coating layer onto the porous polymer substrate, it is preferred to use a slot coating or dip coating process. The slot coating process includes coating a slurry supplied through a slot die onto the whole surface of a substrate and is capable of controlling the thickness of a coating layer depending on the flux supplied from a metering pump. In addition, the dip coating process includes dipping a substrate into a tank containing a slurry to carry out coating and is capable of controlling the thickness of a coating layer depending on the concentration of the slurry and the rate of removing the substrate from the tank. Further, in order to control the coating thickness more precisely, it is possible to carry out post-metering through a Mayer bar or the like, after dipping.

Then, the porous polymer substrate coated with the slurry for forming a porous coating layer may be dried in a dryer, such as an oven, to form a porous coating layer on at least one surface of the porous polymer substrate.

In the porous coating layer, the inorganic particles are bound to one another by the binder polymer, while they are packed and are in contact with each other, thereby forming interstitial volumes among the inorganic particles, and the interstitial volumes among the inorganic particles become vacant spaces to form pores.

In other words, the binder polymer attaches the inorganic particles to one another so that they may retain their binding states. For example, the binder polymer connects the inorganic particles with one another and fixes them. In addition, the pores of the porous coating layer are those formed by the interstitial volumes among the inorganic particles which become vacant spaces. The spaces may be defined by the inorganic particles facing each other substantially in a closely packed or densely packed structure of the inorganic particles.

The drying may be carried out in a drying chamber, wherein the condition of the drying chamber is not particularly limited due to the application of a non-solvent.

According to an embodiment of the present disclosure, the separator is dried under a humidified condition. For example, the drying may be carried out under a relative humidity of 30% or more, 35% or more, or 40% or more, and 80% or less, 75% or less, or 70% or less.

Meanwhile, the separator according to an embodiment of the present disclosure may have an adhesion (Lami strength) to an electrode of 60-300 gf/25 mm and may show a compression ratio of the porous polymer substrate of 0-7% after lamination.

In another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer batteries, are preferred.

The two electrodes, positive electrode and negative electrode, used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current

collector include foil made of copper, gold, nickel, copper alloys or a combination thereof.

The electrolyte that may be used in the electrochemical device according to the present disclosure is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Comparative Example 1**

First, polyvinylidene fluoride-co-hexafluoropropylene (PVDF-HFP) as a binder polymer was introduced to acetone as a solvent and dissolved therein at 50°C for about 4 hours to prepare a binder polymer solution. Next, aluminum hydroxide ($Al(OH)_3$) (particle size: 800 nm) as inorganic particles was introduced to the binder polymer solution. Then, isopropyl trioleyl titanate as a dispersing agent was introduced thereto. Herein, the weight ratio of the inorganic particles : dispersing agent : binder polymer was controlled to 73 : 2 : 25 to prepare slurry for forming a porous coating layer.

The slurry for forming a porous coating layer was applied to both surfaces of a polyethylene porous film (porosity: 45%) having a thickness of 9 $\mu$m through a dip coating process at 23°C under a relative humidity of 40% so that the total loading amount might be 9 g/$m^2$, followed by drying, to obtain a separator having a porous coating layer. The test results are shown in the following Table 1.

**Comparative Example 2**

A separator was obtained in the same manner as Comparative Example 1, except that thermoplastic polyurethane (AM160, Sun Yang Global Co.) was used alone as a binder polymer instead of polyvinylidene fluoride-co-hexafluoropropylene (PVDF-HFP). The test results are shown in the following Table 1.

**Comparative Example 3**

A separator was obtained in the same manner as Comparative Example 1, except that thermoplastic polyurethane (AM160, Sun Yang Global Co.) was used as a binder polymer instead of polyvinylidene fluoride-co-hexafluoropropylene (PVDF-HFP), and the thermoplastic polyurethane was introduced to methyl ethyl ketone as a solvent instead of acetone. The test results are shown in the following Table 1.

**Comparative Example 4**

A separator was obtained in the same manner as Comparative Example 1, except that thermoplastic polyurethane (AM100, Sun Yang Global Co.) was used as a binder polymer instead of polyvinylidene fluoride-co-hexafluoropropylene (PVDF-HFP), and the thermoplastic polyurethane was introduced to methyl ethyl ketone as a solvent instead of acetone. The test results are shown in the following Table 1.

**Comparative Example 5**

A separator was obtained in the same manner as Comparative Example 1, except that polyvinylidene fluoride-co-hexafluoropropylene (PVDF-HFP) as a binder polymer was not used alone, but thermoplastic polyurethane (AM160, Sun Yang Global Co.) and polyvinylidene fluoride-co-hexafluoropropylene (PVDF-HFP) were used at a weight ratio of 70 : 30 as shown in the following Table 1. The test results are shown in Table 1.

**Comparative Example 6**

A separator was obtained in the same manner as Comparative Example 1, except that polyvinylidene fluoride-co-hexafluoropropylene (PVDF-HFP) as a binder polymer was not used alone, but thermoplastic polyurethane (AM160, Sun Yang Global Co.) and polyvinylidene fluoride-co-hexafluoropropylene (PVDF-HFP) were used at a weight ratio of 70 : 30 and introduced to methyl ethyl ketone as a solvent, as shown in the following Table 1. The test results are shown in Table 1.

**Comparative Example 7**

A separator was obtained in the same manner as Comparative Example 1, except that polyvinylidene fluoride-co-hexafluoropropylene (PVDF-HFP) as a binder polymer was not used alone, but thermoplastic polyurethane (AM160, Sun Yang Global Co.) and polymethyl methacrylate (weight average molecular weight 150,000, Tg 80°C) were used at a weight ratio of 70 : 30 and introduced to acetone as a solvent, as shown in the following Table 1. The test results are shown in Table 1.

**Example 1**

First, thermoplastic polyurethane (AM160, Sun Yang Global Co.) as a first binder polymer and polymethyl methacrylate (weight average molecular weight 150,000, Tg 80°C) as a second binder polymer were introduced to methyl ethyl ketone as a solvent at a weight ratio of 90 : 10, and dissolved therein at 50°C for about 4 hours to prepare a binder polymer solution. Next, aluminum hydroxide ($Al(OH)_3$) (particle size: 800 nm) as inorganic particles was introduced to the binder polymer solution. Then, isopropyl trioleyl titanate as a dispersing agent was introduced thereto. Herein, the weight ratio of the inorganic particles : dispersing agent : binder polymer was controlled to 73 : 2 : 25 to prepare slurry for forming a porous coating layer (the binder polymer in the weight ratio refers to the total content of the first binder polymer and the second binder polymer).

The slurry for forming a porous coating layer was applied to both surfaces of a polyethylene porous film (porosity: 45%) having a thickness of 9 μm through a dip coating process at 23°C under a relative humidity of 40% so that the total loading amount might be 9 $g/m^2$, followed by drying, to obtain a separator having a porous coating layer. The test results are shown in the following Table 1 and Table 2.

In this Example, the weight average molecular weight of the binder polymer may be determined by using gel permeation chromatography (GPC, PL GPC220, Agilent technologies).

Particularly, the weight average molecular weight may be determined under the following analysis conditions:

- Column: PL MiniMixed B x 2
- Solvent: THF
- Flow rate: 0.3 mL/min
- Sample concentration: 2.0 mg/mL
- Injection amount: 10 μL
- Column temperature: 40°C
- Detector: Agilent RI detector
- Standard: Polystyrene (corrected with tertiary function)
- Data processing: ChemStation

**Example 2**

A separator was obtained in the same manner as Example 1, except that the weight ratio of the first binder polymer : the second binder polymer was controlled to 70 : 30. The test results are shown in the following Table 2.

**Example 3**

A separator was obtained in the same manner as Example 1, except that the weight ratio of the first binder polymer : the second binder polymer was controlled to 50 : 50. The test results are shown in the following Table 2.

**Example 4**

A separator was obtained in the same manner as Example 1, except that the weight ratio of the first binder polymer : the second binder polymer was controlled to 30 : 70. The test results are shown in the following Table 2.

**Comparative Example 8**

A separator was obtained in the same manner as Example 1, except that the weight ratio of the first binder polymer : the second binder polymer was controlled to 10 : 90. The test results are shown in the following Table 2.

**Example 5**

A separator was obtained in the same manner as Example 2, except that thermoplastic polyurethane (AM100, Sun Yang Global Co.) was used as the first binder polymer instead of the thermoplastic polyurethane (AM160, Sun Yang Global Co.). The test results are shown in the following Table 2.

**[Test Examples]**

**1) Manufacture of Negative Electrode**

First, natural graphite, carbon black, carboxymethyl cellulose (CMC) and styrene butadiene rubber (SBR) were mixed with water at a weight ratio of 96 : 1 : 2 : 2 to prepare negative electrode slurry. Then, the negative electrode slurry was coated on copper (Cu) foil to a capacity of 3.55 mAh/g to form a thin electrode plate, and the electrode plate was dried at 135°C for 3 hours or more and pressed to obtain a negative electrode.

**2) Manufacture of Positive Electrode**

First, $LiNi_{0.6}Co_{0.2}Mn_{0.2}O_2$ as a positive electrode active material, carbon black, polyvinylidene fluoride (PVDF) were introduced to N-methyl-2-pyrrolidone (NMP) at a weight ratio of 96 : 2 : 2 and mixed therein to prepare positive electrode slurry. The positive electrode slurry was coated on aluminum foil as a positive electrode current collector having a thickness of 20 μm to a capacity of 3.28 mAh/g to obtain a positive electrode.

**3) Adhesion of Separator with Electrode**

Then, the resultant separator was laminated with electrodes in such a manner that the porous coating layer of the separator might face the negative electrode active material layer of the electrode of 1), and then the resultant structure was pressed at 70°C under 600 kgf for 1 second to obtain an electrode assembly including the negative electrode laminated with the separator.

[Table 1]

| | Feature | Weight ratio of thermoplastic polymer:two types of binder polymers | Solvent | Composition | | | | Results | | | | Compression ratio of porous polymer substrate (%) | Remark |
|---|---|---|---|---|---|---|---|---|---|---|---|---|---|
| | | | | Thermoplastic polyurethane (AM100) | Thermoplastic polyurethane (AM160) | Fluorine-based binder polymer | Acrylate-based binder polymer | Thickness of separator (μm) | Slurry loading amount ($g/m^2$) | Air permeability of separator (sec/100 mL) | Electrode-separator adhesion (gf/25 mm) | | |
| Comp. Ex. 1 | PVDF-based polymer alone | - | Acetone | | | 25 | | 18.1 | 9 | 265 | 65 | 8.2 | Poor compression ratio |
| Comp. Ex. 2 | Thermoplastic polyurethane alone | 100:0 | Acetone | | 25 | | | 17.8 | 8.9 | 431 | 45 | 1.7 | Poor air permeability and adhesion, not applicable |
| Comp. Ex. 3 | Thermoplastic polyurethane alone | 100:0 | Methyl ethyl ketone | | 25 | | | 17.5 | 8.8 | 525 | 23 | 2.4 | Poor air permeability and adhesion, not applicable |
| Comp. Ex. 4 | Thermoplastic polyurethane alone | 100:0 | Methyl ethyl ketone | 25 | | | | 17.6 | 9.1 | 895 | No adhesion | 2.5 | Poor air permeability and adhesion, not applicable |
| Comp. Ex. 5 | Thermoplastic binder polymer combined with fluorine-based binder polymer | 70:30 | Acetone | | 17.5 | 7.5 | | 17.8 | 8.9 | 435 | 27 | 1.7 | Miscibility of thermoplastic polyurethane with fluorine-based binder polymer is poor to cause low adhesion between porous coating layer and electrode |
| Comp. Ex. 6 | Thermoplastic binder polymer combined with fluorine-based binder polymer | 70:30 | Methyl ethyl ketone | | 17.5 | 7.5 | | x | x | x | x | x | Slurry phase stability is low to cause interlayer separation, coating is not available |

(continued)

| | Feature | Weight ratio of thermoplastic polymer:two types of binder polymers | Solvent | Composition | | | | Results | | | | Compression ratio of porous polymer substrate (%) | Remark |
|---|---|---|---|---|---|---|---|---|---|---|---|---|---|
| | | | | Thermoplastic polyurethane (AM100) | Thermoplastic polyurethane (AM160) | Fluorine-based binder polymer | Acrylate-based binder polymer | Thickness of separator (μm) | Slurry loading amount ($g/m^2$) | Air permeability of separator (sec/100 mL) | Electrode-separator adhesion (gf/25 mm) | | |
| Comp. Ex. 7 | Thermoplastic polyurethane combined with acrylate-based polymer | 70:30 | Acetone | | | | | 18 | 9.2 | 732 | 26 | 3.5 | Poor adhesion to electrode in acetone solvent |
| Ex. 1 | Thermoplastic polyurethane combined with acrylate-based polymer | 90:10 | Methyl ethyl ketone | | 22.5 | | 2.5 | 17.9 | 9.1 | 289 | 97 | 1.9 | |

[Table 2]

| | Feature | Weight ratio of thermoplastic polymer:two types of binder polymers | Solvent | Composition | | | | Results | | | | Compression ratio of porous polymer substrate (%) | Remark |
|---|---|---|---|---|---|---|---|---|---|---|---|---|---|
| | | | | Thermoplastic polyurethane (AM100) | Thermoplastic polyurethane (AM160) | Fluorine-based binder polymer | Acrylate-based binder polymer | Thickness of separator (μm) | Slurry loading amount (g/m²) | Air permeability of separator (sec/100 mL) | Electrode-separator adhesion (gf/25 mm) | | |
| Ex. 1 | Thermoplastic polyurethane combined with acrylate-based polymer | 90:10 | Methyl ethyl ketone | | 22.5 | | 2.5 | 17.9 | 9.1 | 289 | 97 | 1.9 | |
| Ex. 2 | Thermoplastic polyurethane combined with acrylate-based polymer | 70:30 | Methyl ethyl ketone | | 17.5 | | 7.5 | 18 | 8.9 | 251 | 125 | 2.3 | |
| Ex. 3 | Thermoplastic poly urethane combined with acrylate-based polymer | 50:50 | Methyl ethyl ketone | | 12.5 | | 12.5 | 18.3 | 9.3 | 232 | 112 | 2.5 | |
| Ex. 4 | Thermoplastic polyurethane combined with acrylate-based polymer | 30:70 | Methyl ethyl ketone | | 7.5 | | 17.5 | 17.6 | 8.8 | 242 | 67 | 4.8 | |
| Comp. Ex. 8 | Thermoplastic polyurethane combined with acrylate-based polymer | 10:90 | Methyl ethyl ketone | | 2.5 | | 22.5 | 17.9 | 9 | 351 | 35 | 7.1 | No effect of improving adhesion due to low content of thermoplastic polyurethane |
| Ex. 5 | Thermoplastic polyurethane combined with acrylate-based polymer | 70:30 | Methyl ethyl ketone | 17.5 | | | 7.5 | 18.2 | 9.2 | 271 | 75 | 3.1 | |

**Test Methods**

**1) Compression Ratio of Porous Polymer Substrate**

First, each separator was pressurized under a pressure of 2000 kgf at a temperature of 70°C by using a hot press. Next, the separator was subjected to sonication with the solvent introduced during the preparation of the slurry for forming a porous coating layer for 2 minutes to remove the porous coating layer formed on the porous polymer substrate. Then, the thickness of the porous polymer substrate free from the porous coating layer was measured.

After that, the compression ratio was calculated according to the following formula:

Compression ratio = (Initial thickness of porous polymer substrate - Thickness of porous polymer substrate free from porous coating layer) / (Initial thickness of porous polymer substrate) X 100%

**2) Method for Determining Adhesion between Electrode and Separator (Lami strength)**

A negative electrode was obtained as described in Test Example 1) and cut into a size of 25 mm x 100mm. Each of the separators according to Examples and Comparative Examples was cut into a size of 25 mm x 100 mm. The prepared separator was stacked with the negative electrode, and the resultant structure was inserted into PET films having a thickness of 100 μm and adhered by using a flat press. Herein, heating and pressurization were carried out under a pressure of 600 kgf at 70°C for 1 second by using the flat press. The adhered separator and negative electrode were attached to slide glass by using a double-sided tape. The end portion (10 mm or less from the end of the adhered surface) of the separator was peeled and attached to a PET film (25 mm x 100 mm) by using a single-sided tape in the longitudinal direction. Then, the slide glass was mounted to the lower holder of a UTM instrument (LLOYD Instrument LF Plus), and the PET film having the separator attached thereto was mounted to the upper holder of the UTM instrument. After that, force was applied thereto at a rate of 300 mm/min with an angle of 180°, and the force required to separate the negative electrode and the porous coating layer facing the negative electrode from each other was determined.

**3) Method for Determining Thickness**

The thickness of each separator was determined by using a thickness gauge (Mitutoyo Co., VL-50S-B).

**4) Method for Determining Air Permeability**

The air permeability of each separator was determined by using a Gurley type air permeability tester according to JIS P-8117. Herein, the air permeability was determined as time required for 100 mL of air to pass through a diameter of 28.6 mm and an area of 645 $mm^2$.

As can be seen from Table 1 and Table 2, when using a conventional fluorine-based binder polymer alone, there is a problem of poor compression ratio. In addition, when using thermoplastic polyurethane alone according to Comparative Examples 2-4, it is not possible to form pores and a surface adhesive layer under a humidified phase separation process. When thermoplastic polyurethane is combined with a fluorine-based binder polymer according to Comparative Examples 5 and 6, both polymers are not miscible to cause interlayer separation, and there is a difficulty in forming an adhesive layer on the surface of the porous coating layer, thereby making it difficult to improve the adhesion to the electrode. Particularly, when using methyl ethyl ketone as a solvent according to Comparative Example 6, interlayer separation occurs, thereby making it difficult to form a porous coating layer itself.

On the contrary, according to an embodiment of the present disclosure, thermoplastic polyurethane shows high miscibility with an acrylate-based binder polymer, as can be seen from Examples 1-5. In addition, when using methyl ethyl ketone as a solvent, it is possible to obtain improved effects in terms of compression, adhesion to an electrode and air permeability.

**Claims**

**1.** A method for manufacturing a separator for a lithium secondary battery, comprising the steps of:

preparing slurry for forming a porous coating layer which comprises inorganic particles dispersed in an asymmetric linear ketone solvent and a binder polymer, comprising a first binder polymer and a second binder polymer, dissolved therein; and

applying the slurry for forming a porous coating layer onto a porous polymer substrate having a plurality of pores,

followed by drying,
wherein the first binder polymer is thermoplastic polyurethane comprising a soft segment having a polyol-derived repeating unit and a hard segment having an urethane binding structure,
the second binder polymer is an acrylate-based polymer having a glass transition temperature (Tg) of 25-125°C, and
the first binder polymer is introduced in an amount larger than 10 parts by weight based on 100 parts by weight of the total content of the binder polymer, and wherein the second binder polymer comprises a repeating unit derived from at least one monomer selected from a methyl acrylate monomer, an ethyl acrylate monomer, a butyl acrylate monomer, a 2-ethylhexyl acrylate monomer, an acrylic acid monomer and a methyl methacrylate monomer.

2. The method for manufacturing a separator for a lithium secondary battery according to claim **1,** wherein the first binder polymer comprises the hard segment and the soft segment at a molar ratio of 10:90-90:10.

3. The method for manufacturing a separator for a lithium secondary battery according to claim **1,** wherein the first binder polymer has a weight average molecular weight of 10,000-1,000,000.

4. The method for manufacturing a separator for a lithium secondary battery according to claim **1,** wherein the second binder polymer has a weight average molecular weight of 10,000-1,000,000.

5. The method for manufacturing a separator for a lithium secondary battery according to claim **1,** wherein the asymmetric linear ketone solvent is an asymmetric linear ketone having a carbon atom number of 4-10.

6. The method for manufacturing a separator for a lithium secondary battery according to claim 1, wherein the asymmetric linear ketone solvent comprises methyl ethyl ketone, methyl propyl ketone, methyl isobutyl ketone, ethyl propyl ketone, ethyl isobutyl ketone, or two or more of them.

7. The method for manufacturing a separator for a lithium secondary battery according to claim 1, wherein the drying step is carried out under a relative humidity of 30-80%.

8. The method for manufacturing a separator for a lithium secondary battery according to claim 1, wherein the weight ratio of the inorganic particles to the total binder polymer is 95:5-5:95.

9. The method for manufacturing a separator for a lithium secondary battery according to claim 1, wherein the asymmetric linear ketone solvent is methyl ethyl ketone, the first binder polymer is thermoplastic polyurethane having a molar ratio of the hard segment to the soft segment of 10:90-90:10, and the second binder polymer is polymethyl methacrylate.

10. The method for manufacturing a separator for a lithium secondary battery according to claim 1, wherein the separator has an adhesion (Lami strength) to an electrode of 0.58-2.94 N (60-300 gf)/25 mm, and shows a compression ratio of the porous polymer substrate of 0-7% after lamination, wherein the adhesion and the compression ratio are measured as reported in the description .

11. A separator for a lithium secondary battery obtained by the method as defined in claim 1, comprising:

a porous polymer substrate; and
a porous coating layer formed on at least one surface of the porous polymer substrate, and comprising inorganic particles, a first binder polymer and a second binder polymer.

12. A lithium secondary battery comprising a positive electrode, a negative electrode and a separator interposed between the positive electrode and the negative electrode, wherein the separator is the same as defined in claim 11.

**Patentansprüche**

1. Verfahren zum Herstellen eines Separators für eine Lithiumsekundärbatterie, umfassend die folgenden Schritte:

Vorbereiten einer Aufschlämmung zur Bildung einer porösen Beschichtungsschicht, die anorganische Partikel, die in einem asymmetrischen linearen Keton als Lösungsmittel dispergiert sind, und ein Bindemittelpolymer, das

darin gelöst ist, umfassend ein erstes Bindemittelpolymer und ein zweites Bindemittelpolymer, umfasst; und
Aufbringen der Aufschlämmung zur Bildung einer porösen Beschichtungsschicht auf ein poröses Polymersubstrat, das eine Vielzahl von Poren aufweist, gefolgt vom Trocknen,
wobei das erste Bindemittelpolymer ein thermoplastisches Polyurethan ist, das ein Weichsegment, das eine polyolderivierte Wiederholungseinheit aufweist, und ein Hartsegment, das eine Urethanbindungsstruktur aufweist, umfasst,
wobei das zweite Bindemittelpolymer ein Polymer auf Acrylatbasis ist, das eine Glasübergangstemperatur (Tg) von 25-125 °C aufweist, und
wobei das erste Bindemittelpolymer in einer Menge von mehr als 10 Gewichtsteilen bezogen auf 100 Gewichtsteile des Gesamtgehalts an Bindemittelpolymer eingebracht wird, und wobei das zweite Bindemittelpolymer eine Wiederholungseinheit umfasst, die von mindestens einem Monomer abgeleitet ist, das aus einem Methylacrylatmonomer, einem Ethylacrylatmonomer, einem Butylacrylatmonomer, einem 2-Ethylhexylacrylatmonomer, einem Acrylsäuremonomer, und einem Methylmethacrylatmonomer ausgewählt ist.

**2.** Verfahren zum Herstellen eines Separators für eine Lithiumsekundärbatterie nach Anspruch 1, wobei das erste Bindemittelpolymer das Hartsegment und das Weichsegment in einem Stoffmengenverhältnis von 10:90-90:10 umfasst.

**3.** Verfahren zum Herstellen eines Separators für eine Lithiumsekundärbatterie nach Anspruch 1, wobei das erste Bindemittelpolymer ein gewichtsgemitteltes Molekulargewicht von 10.000-1.000.000 aufweist.

**4.** Verfahren zum Herstellen eines Separators für eine Lithiumsekundärbatterie nach Anspruch 1, wobei das zweite Bindemittelpolymer ein gewichtsgemitteltes Molekulargewicht von 10.000-1.000.000 aufweist.

**5.** Verfahren zum Herstellen eines Separators für eine Lithiumsekundärbatterie nach Anspruch 1, wobei das asymmetrische lineare Keton als Lösungsmittel ein asymmetrisches lineares Keton ist, das eine Kohlenstoffatomzahl von 4-10 aufweist.

**6.** Verfahren zum Herstellen eines Separators für eine Lithiumsekundärbatterie nach Anspruch 1, wobei das asymmetrische lineare Keton als Lösungsmittel Methylethylketon, Methylpropylketon, Methylisobutylketon, Ethylpropylketon, Ethylisobutylketon, oder zwei oder mehr hiervon umfasst.

**7.** Verfahren zum Herstellen eines Separators für eine Lithiumsekundärbatterie nach Anspruch 1, wobei der Trocknungsschritt unter einer relativen Luftfeuchtigkeit von 30-80 % durchgeführt wird.

**8.** Verfahren zum Herstellen eines Separators für eine Lithiumsekundärbatterie nach Anspruch 1, wobei das Gewichtsverhältnis der anorganischen Partikel zum gesamten Bindemittelpolymer 95:5-5:95 beträgt.

**9.** Verfahren zum Herstellen eines Separators für eine Lithiumsekundärbatterie nach Anspruch 1, wobei das asymmetrische lineare Keton als Lösungsmittel Methylethylketon ist, das erste Bindemittelpolymer ein thermoplastisches Polyurethan ist, das ein Stoffmengenverhältnis des Hartsegments zum Weichsegment von 10:90-90:10 aufweist, und das zweite Bindemittelpolymer Polymethylmethacrylat ist.

**10.** Verfahren zum Herstellen eines Separators für eine Lithiumsekundärbatterie nach Anspruch 1, wobei der Separator eine Haftfestigkeit (Lami strength) gegenüber einer Elektrode von 0,58-2,94 N (60-300 gf)/25 mm aufweist, und einen Kompressionsgrad des porösen Polymersubstrats von 0-7 % nach der Laminierung zeigt, wobei die Haftfestigkeit und der Kompressionsgrad gemessen werden, wie in der Beschreibung berichtet.

**11.** Separator für eine Lithiumsekundärbatterie, der durch das Verfahren wie in Anspruch 1 definiert erhalten wird, umfassend:

ein poröses Polymersubstrat; und
eine poröse Beschichtungsschicht, die auf mindestens einer Oberfläche des porösen Polymersubstrats gebildet ist und anorganische Partikel, ein erstes Bindemittelpolymer und ein zweites Bindemittelpolymer umfasst.

**12.** Lithiumsekundärbatterie, die eine positive Elektrode, eine negative Elektrode, und einen Separator, der zwischen der positiven Elektrode und der negativen Elektrode eingefügt ist, umfasst, wobei der Separator mit dem in Anspruch 11 definierten Separator identisch ist.

## Revendications

**1.** Procédé de fabrication d'un séparateur pour une batterie secondaire au lithium, comprenant les étapes suivantes :

la préparation d'une suspension pour former une couche de revêtement poreuse qui comprend des particules inorganiques dispersées dans un solvant cétone linéaire asymétrique et un polymère liant, comprenant un premier polymère liant et un deuxième polymère liant, dissoutes dans celle-ci ; et
l'application de la suspension pour former une couche de revêtement poreuse sur un substrat polymère poreux présentant une pluralité de pores, suivie d'un séchage,
dans lequel le premier polymère liant est du polyuréthane thermoplastique comprenant un segment souple présentant un motif de répétition dérivé de polyol et un segment dur présentant une structure de liaison d'uréthane,
le deuxième polymère liant est un polymère à base d'acrylate présentant une température de transition vitreuse (Tg) de 25 à 125 °C, et
le premier polymère liant est introduit en une quantité supérieure à 10 parties en poids sur la base de 100 parties en poids de la teneur totale du polymère liant, et dans lequel le deuxième polymère liant comprend un motif de répétition dérivé d'au moins un monomère sélectionné parmi un monomère d'acrylate de méthyle, un monomère d'acrylate d'éthyle, un monomère d'acrylate de butyle, un monomère d'acrylate de 2-éthylhexyle, un monomère d'acide acrylique et un monomère de méthacrylate de méthyle.

**2.** Procédé de fabrication d'un séparateur pour une batterie secondaire au lithium selon la revendication 1, dans lequel le premier polymère liant comprend le segment dur et le segment souple à un rapport molaire de 10:90-90:10.

**3.** Procédé de fabrication d'un séparateur pour une batterie secondaire au lithium selon la revendication 1, dans lequel le premier polymère liant présente un poids moléculaire moyen en poids de 10 000 à 1 000 000.

**4.** Procédé de fabrication d'un séparateur pour une batterie secondaire au lithium selon la revendication 1, dans lequel le deuxième polymère liant présente un poids moléculaire moyen en poids de 10 000 à 1 000 000.

**5.** Procédé de fabrication d'un séparateur pour une batterie secondaire au lithium selon la revendication 1, dans lequel le solvant cétone linéaire asymétrique est une cétone linéaire asymétrique présentant un nombre d'atomes de carbone de 4 à 10.

**6.** Procédé de fabrication d'un séparateur pour une batterie secondaire au lithium selon la revendication 1, dans lequel le solvant cétone linéaire asymétrique comprend de la méthyléthylcétone, de la méthylpropylcétone, de la méthylisobutylcétone, de l'éthylpropylcétone, de l'éthylisobutylcétone, ou deux ou plus de celles-ci.

**7.** Procédé de fabrication d'un séparateur pour une batterie secondaire au lithium selon la revendication 1, dans lequel l'étape de séchage est mise en œuvre sous une humidité relative de 30 à 80 %.

**8.** Procédé de fabrication d'un séparateur pour une batterie secondaire au lithium selon la revendication 1, dans lequel le rapport pondéral des particules inorganiques sur le polymère liant total est de 95:5-5:95.

**9.** Procédé de fabrication d'un séparateur pour une batterie secondaire au lithium selon la revendication 1, dans lequel le solvant cétone linéaire asymétrique est la méthyléthylcétone, le premier polymère liant est le polyuréthane thermoplastique présentant un rapport molaire du segment dur au segment souple de 10:90-90:10, et le deuxième polymère liant est le polyméthacrylate de méthyle.

**10.** Procédé de fabrication d'un séparateur pour une batterie secondaire au lithium selon la revendication 1, dans lequel le séparateur présente une adhérence (résistance au délaminage) à une électrode de 0,58-2,94 N (60-300 gf)/25 mm, et présente un rapport de compression du substrat polymère poreux de 0 à 7 % après stratification, dans lequel l'adhérence et le rapport de compression sont mesurés comme mentionné dans la description.

**11.** Séparateur pour une batterie secondaire au lithium obtenu par le procédé tel que défini dans la revendication 1, comprenant :

un substrat polymère poreux ; et
une couche de revêtement poreuse formée sur au moins une surface du substrat polymère poreux, et

comprenant des particules inorganiques, un premier polymère liant et un deuxième polymère liant.

**12.** Batterie secondaire au lithium comprenant une électrode positive, une électrode négative et un séparateur interposé entre l'électrode positive et l'électrode négative, dans laquelle le séparateur est le même que celui défini dans la revendication 11.

FIG. 1